(19) Europäisches Patentamt

European Patent Office

Office européen des brevets

(11) **EP 0 740 492 B1**

(12) **EUROPÄISCHE PATENTSCHRIFT**

(45) Veröffentlichungstag und Bekanntmachung des Hinweises auf die Patenterteilung:
**14.09.2005  Patentblatt 2005/37**

(51) Int Cl.⁷: **H05B 41/04**, H05B 41/292, H05B 41/288, H05B 31/48

(21) Anmeldenummer: **96106089.4**

(22) Anmeldetag: **17.04.1996**

(54) **Verfahren und Schaltungsanordnung zum Starten und Betreiben einer Entladungslampe**

Process and circuit for starting and operating a discharge lamp

Procédé et circuit pour amorcer et alimenter d'une lampe à décharge

(84) Benannte Vertragsstaaten:
**BE DE FR GB IT NL**

(30) Priorität: **27.04.1995  DE 19515511**

(43) Veröffentlichungstag der Anmeldung:
**30.10.1996  Patentblatt 1996/44**

(73) Patentinhaber: **Patent-Treuhand-Gesellschaft für elektrische Glühlampen mbH
81543 München (DE)**

(72) Erfinder:
- **Huber, Andreas
  82216 Maisach (DE)**
- **Lang, Dieter
  83052 Bruckmühl (DE)**

(56) Entgegenhaltungen:
**EP-A- 0 210 877          DE-A- 4 015 398
DE-A- 4 410 177          US-A- 4 912 374**

**Beschreibung**

Die Erfindung betrifft ein Verfahren zum Starten und Betreiben einer Entladungslampe nach dem Oberbegriff des Anspruchs 1 sowie eine dazu ausgelegte Schaltungsanordnung nach Anspruch 2.

Der Betrieb von Entladungslampen, insbesondere von Hochdruckentladungslampen wird im Stand der Technik dadurch gestartet, daß der Lampe eine niederfrequente Rechteckspannung, beispielsweise mit 90-150 Hz zugeführt wird. Dieser Spannung werden die Zündimpulse überlagert. Sobald die Lampe zündet, wird spätestens nach einer halben Periode der Nennfrequenz die Lampenspannung und der Lampenstrom umgepolt. Bei einer Nennfrequenz von 90 Hz erfolgt die Umpolung nach 5,5 ms. Zu diesem Zeitpunkt haben die Elektroden eine Temperatur, die eine thermische Emission von Elektronen nicht erlaubt. Bei der genannten Umpolung der Lampenspannung und des Lampenstroms neigt die Lampe dazu, wieder auszugehen, oder aber sie brennt für einige Millisekunden mit einer relativ hohen Brennspannung von etwa 150-200 V in einer Glimmentladung.

Eine Glimmentladung ist mit mehreren Nachteilen verbunden. Zum einen führt eine Glimmentladung zu einem erheblichen Materialabtrag von der gerade aktivierten Elektrode. Zum anderen führt eine Glimmentladung zu einer Schwärzung des Lampenkolbens. Darüber hinaus führt eine Glimmentladung auch zu einem Lichtstromabfall. Diese unerwünschten Wirkungen einer Glimmentladung wiederholen sich bei jedem Umpolvorgang.

Ein wesentlicher Nachteil des Standes der Technik besteht darin, daß der den Elektroden im Anlaufbetriebszustand zugeführte Strom einen Formfaktor (Verhältnis Effektivwert/Gleichrichtwert) von ca. "1" hat, wodurch die Elektroden in diesem Betriebszustand thermisch stark belastet werden und sogar bis auf ihre Schmelztemperatur erwärmt werden. Insbesondere ist die Belastung dann stark ausgeprägt, wenn Anlaufströme in der Entladungslampe gebildet werden, die wesentlich über dem Nominalbetriebsstrom liegen.

Die EP 0 210 877 zeigt eine Niederdruckentladungslampe, und zwar eine sog. Energiesparlampe, bei der zugunsten des Wirkungsgrads ein Formfaktor von unter 1,7 gewählt werden soll. Die DE 40 15 398 zeigt eine Hochdruckentladungslampe, bei der in einem Anlaufbetriebszustand eine höhere elektrische Leistung zugeführt wird als im Nominalbetriebszustand. Die Leistung soll kontinuierlich und abhängig von einer vorherigen Ausschaltzeit der Lampe abgebaut werden. Die US 4,912, 374 zeigt eine Hochdruckentladungslampe, bei der eine alternierende Reihenfolge eines Betriebs mit einem hochfrequenzmodulierten Lampengleichstrom und eines Betriebs mit einem Hochfrequenzwechselstrom der Lampe durchgeführt wird. Schließlich wird verwiesen auf die nachveröffentlichte DE 44 10 177.

Ausgehend von diesem Stand der Technik liegt der Erfindung die Aufgabe zugrunde, ein Verfahren der eingangs genannten Art und eine entsprechende Schaltungsanordnung anzugeben, die einen Anlaufbetrieb einer Entladungslampe ermöglichen, bei welcher die Elektroden der Entladungslampe nur gering belastet werden. Diese Aufgabe wird gelöst durch ein Verfahren nach Anspruch 1 und eine Schaltungsanordnung nach Anspruch 2, wobei bevorzugte Ausgestaltungen in den abhängigen Ansprüchen wiedergegeben sind.

Die Erfindung zeichnet sich durch eine Mehrzahl von Vorteilen aus. Die Lebensdauer von Entladungslampen wird erheblich erhöht, da die Elektroden im Anlaufbetrieb praktisch nur auf die notwendige Emissionstemperatur erwärmt werden. Andererseits kann der Anlaufbetriebsstrom erhöht werden, so daß ein schneller Lichtstromanstieg bewirkt werden kann, ohne daß die Elektroden geschädigt werden.

Weitere Vorteile, Merkmale und Anwendungsmöglichkeiten der Erfindung ergeben sich aus der nachfolgenden Beschreibung in Zusammenhang mit der Zeichnung.

Es zeigt

Fig. 1     ein Zeitdiagramm für die im Stand der Technik beim Starten einer Entladungslampe zugeführte Spannung bzw. den zugeführten Strom,

Fig. 2     ein schematisches Diagramm einer erfindungsgemäßen Schaltungsanordnung,

Fig. 3     eine schematische Darstellung der Betriebsströme bei unterschiedlichen Betriebszuständen des erfindungsgemäßen Verfahrens, und

Fig. 4     den Stromverlauf im Anlaufbetriebszustand des erfindungsgemäßen Verfahrens unter Verwendung einer nichtlinearen Induktivität.

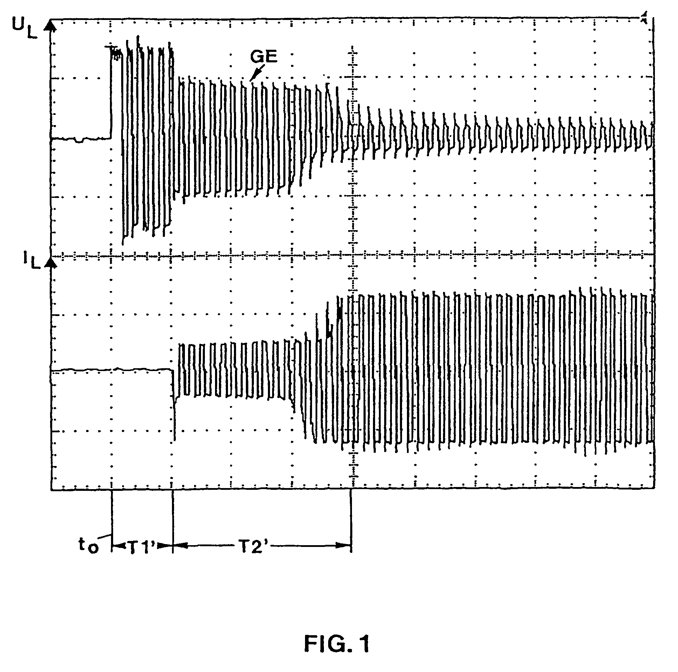

Entladungslampen, insbesondere Hochdruckentladungslampen, wird im Stand der Technik bereits zu Betriebsbeginn (Zeitpunkt $t_o$) eine Wechselspannung mit der Nennfrequenz zugeführt. Dies ist in Fig. 1 schematisch dargestellt, wobei im oberen Teil der Figur 1 die Lampenspannung $U_L$ (mit 200 V/Einheit) und im unteren Teil der Figur 1 der Lampenstrom $I_L$ (mit 2A/Einheit) dargestellt ist. In dieser Betriebsweise nach dem Stand der Technik, wird der Lampe vom Zeitpunkt ($t_o$) des Einschaltens eine Spannung $U_L$ mit der Nennfrequenz zugeführt. Dieser sind in einem Zeitraum T1' Zündimpulse überlagert. Die Zündimpulse haben eine Amplitude von 4 bis 4,5 kV und eine Breite von 1 - 2 Mikrosekunden, so daß die Zündimpulse in Fig. 1 nicht dargestellt sind (1 Zeitabschnitt in Fig. 1 = 50 Millisekunden). In einem daran anschließenden Zeitraum T2' entstehen bei den Umpolvorgängen der Lampenspannung Glimmentladungen GE, wobei diese Glimmentladungen solange auftreten können, bis die Elektroden ihre Emissionstemperatur erreichen (Ende des Zeitraums T2'). Typische Werte für Glimmentladungen liegen im Bereich von 150 bis 250 Volt. Jede Glimmentladung bewirkt einen Materialabtrag von der jeweiligen Kathode und eine entsprechende Schwärzung des Lampenkolbens.

Im Anschluß an den Zeitraum T2' steigt die Lampenspannung von 10 bis 20 Volt bis auf über Nennwert und der Lampenstrom sinkt auf seinen Nennwert. Dabei ist der Verlauf der Spannung $U_L$ im Anschluß an den Zeitraum T1' rechteckförmig mit einem resultierenden Formfaktor F = 1.

Dabei gilt

$$F = \frac{I_{eff}}{I_{gl}}$$

$$I_{eff} = \frac{1}{T}\sqrt{\int_0^T (I(t))^2\, dt}$$

$$I_{gl} = \frac{1}{T}\int_0^T |I(t)|\, dt$$

Um beim Kaltstart einer Entladungslampe, insbesondere einer Hochdruckentladungslampe, einen möglichst schnellen Anstieg des Lichtstromes bzw. des Lampenstromes zu erreichen, wird der Entladungslampe erfindungsgemäß in einem ersten kurzen Zeitraum (Anlaufbetriebszustand) nach ihrer Zündung ein Strom mit einem Effektivwert $I_{eff1}$ zugeführt, der höher ist als der Effektivwert des Nennstromes in einem Nominalbetriebszustand, der dem Anlaufbetriebszustand folgt. Insbesondere wird die Lampenleistung im Anlaufbetriebszustand über die Nennbetriebsleistung der Lampe hinaus erhöht. Erfindungsgemäß wird in dem Anlaufbetriebszustand nach der Zündung der Formfaktor F größer als "1" und vorzugsweise möglichst groß gewählt.

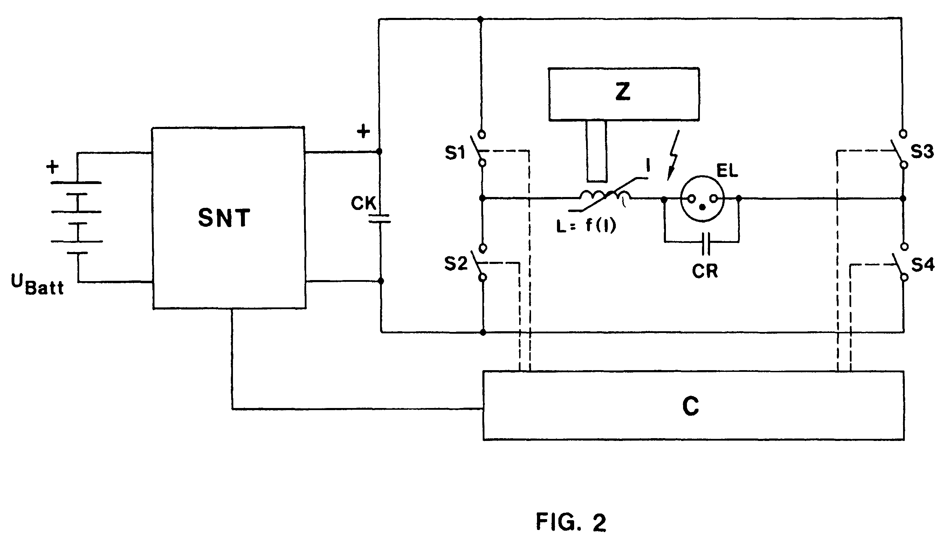

Während des Anlaufbetriebszustands wird die Frequenz des Lampenstromes größer gewählt als die Frequenz des Nominalbetriebsstroms. Durch die Schaltungskonfiguration z.B. nach Figur 2 wird ein Formfaktor gebildet, der größer als 1 ist.

Die in Fig. 2 dargestellte Schaltungskonfiguration weist eingangsseitig ein Schaltnetzteil SNT mit einer Regeleinrichtung auf. Das Schaltnetzteil SNT wird von einer Spannungsquelle $U_{Batt}$ versorgt. Ausgangsseitig ist das Schaltnetzteil mit einer parallelgeschalteten Kapazität CK verbunden. Parallel zu dieser Kapazität ist eine Brückenanordnung, insbesondere eine Vollbrücke mit Schaltelementen S1, S2, S3 und S4 geschaltet. Im Brückenzweig zwischen den Verbindungspunkten von S1 und S2 einerseits und S3 und S4 andererseits ist die Entladungslampe EL sowie eine Induktivität L geschaltet.

Die Zündung der Entladungslampe EL kann durch eine Zündvorrichtung Z erfolgen, die durch mindestens eine zusätzliche Wicklung auf der Induktivität L gebildet ist. Alternativ hierzu kann die Lampe unter Verwendung einer Kapazität CR gezündet werden, die parallel zu der Entladungslampe EL angeordnet ist und zusammen mit der Induktivität L einen Serienresonanzschwingkreis bildet.

Die Schaltelemente S1, S2, S3, S4 werden von einer Steuerschaltung C angesteuert. Diese ist außerdem mit dem Schaltnetzteil SNT verbunden, das die Spannungsversorgung der Entladungslampe bildet und auch die in die Entladungslampe eingespeiste Leistung regeln kann. Hierzu wird die an den Ausgangsklemmen des Schaltnetzteils SNT anliegende Spannung und der anliegende Strom gemessen, die entsprechenden Werte werden multipliziert und der gebildete Istwert (UxI) wird der Regeleinrichtung zugeführt. Dabei kann der Sollwert der Ausgangsleistung des Schaltnetzteils SNT im Anlaufbetriebszustand von der Steuerschaltung C angehoben werden.

Die Steuerschaltung C steuert die Brückenanordnung entsprechend dem erfindungsgemäßen Verfahren, wobei der Entladungslampe in einem Anlaufbetriebszustand nach dem Zünden der Entladungslampe ein Strom mit einem Effektivwert ($I_{eff1}$) zugeführt wird, der höher ist als der Effektivwert eines Nennstromes, der der Entladungslampe in einem Nominalbetriebszustand zugeführt wird, und wobei der der Entladungslampe im Anlaufzustand zugeführte Strom einen Formfaktor (Verhältnis $I_{eff1}/I_{gl}$) hat, der größer als "1" ist.

In diesem Zusammenhang kann vorgesehen sein, daß der der Entladungslampe im Anlaufzustand zugeführte Strom einen möglichst geringen Gleichrichtwert ($I_{gl}$) hat.

Dabei hat der im Anlaufbetriebszustand (erster Betriebszustand) zugeführte Strom eine Betriebsfrequenz, die größer ist als die Betriebsfrequenz im Nominalbetriebszustand (zweiter Betriebszustand).

Die Steuerschaltung C der erfindungsgemäßen Schaltungsanordnung steuert in dem ersten Betriebszustand ("Anlaufbetriebszustand") Schaltelemente S1, S2, S3, S4 der Brückenanordnung komplementär mit einer relativ hohen Frequenz an. Sie steuert in einem zweiten Betriebszustand (Nominalbetriebszustand) die Schaltelemente S1, S2, S3, S4 der Brückenanordnung komplementär mit einer relativ niedrigen Frequenz an.

Der erste Betriebszustand endet, wenn die Brennspannung der Entladungslampe ihren Nominalwert erreicht hat. Dies wird durch die Steuerschaltung C detektiert. Daran schließt sich der zweite Betriebszustand an, bei dem die Lampenleistung auf den nominalen stationären Wert eingestellt wird. Dabei wird die Brückenbetriebsfrequenz auf einen relativ niedrigen Nominalwert eingestellt, der insbesondere unterhalb akustischer Resonanzen der Entladungslampe liegt.

Die im Brückenzweig angeordnete Induktivität L kann auch so ausgebildet sein, daß sie während des relativ großen Betriebsstroms im Anlaufbetriebszustand im Bereich der Sättigung betrieben wird.

Wenn die Induktivität L in der erfindungsgemäßen Schaltungsanordnung nicht im Bereich der Sättigung betrieben wird, stellt sich im Anlaufbetrieb ein dreieckförmiger Lampenbetriebsstrom ein, der einen Formfaktor von etwa 1,13 gegenüber einem rechteckförmigen Strom (F = 1) hat. Dies bedeutet, daß die Belastung der Elektroden um 13% vermindert wird.

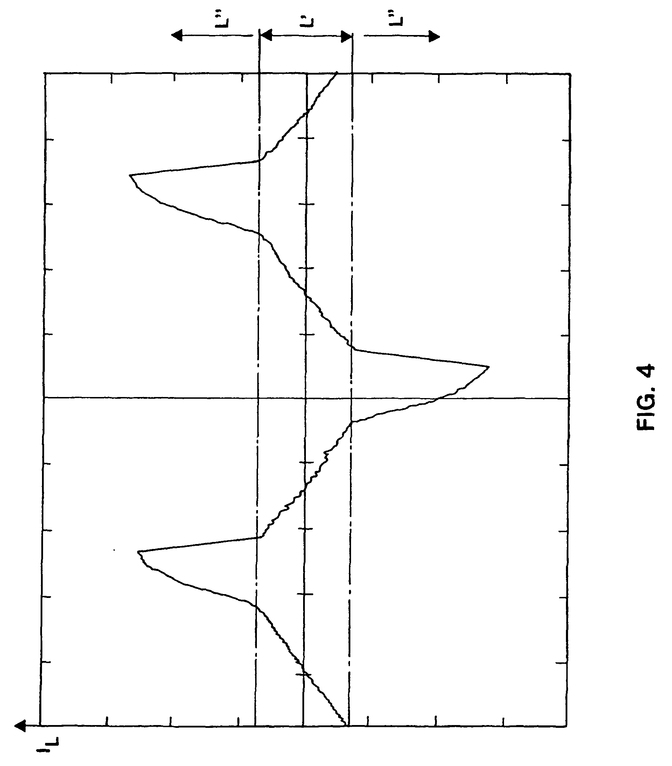

Wenn die Induktivität L in der erfindungsgemäßen Schaltungsanordnung aber im Bereich der Sättigung betrieben wird, kann im ersten Betriebszustand, dem Anlaufbetrieb, ein Lampenbetriebsstrom eingestellt werden, dessen Verlauf in Figur 4 dargestellt ist. Dieser Lampenbetriebsstrom hat einen Formfaktor von etwa 1,45 gegenüber einem rechteckförmigen Strom (F = 1). Dies bedeutet, daß die Belastung der Elektroden um 45% vermindert wird.

Insbesondere ist die nichtlineare Induktivität L so dimensioniert, daß im wesentlichen bei dem 2- bis 3fachen des Effektivwerts des Nennbetriebsstroms eine Sättigung der nichtlinearen Induktivität eintritt.

Die sich durch den großen Betriebsstrom ergebende Abnahme der effektiven Permeabilität und der damit verbundene Rückgang der wirksamen Induktivität L im Lampenkreis lassen den Lampenstrom relativ stark ansteigen.

Durch geeignete Wahl der Parameter L bei Nennbetriebsstrom, Sättigungsstrom und Brückenfrequenz werden Formfaktoren unterschiedlicher Größe erzeugt.

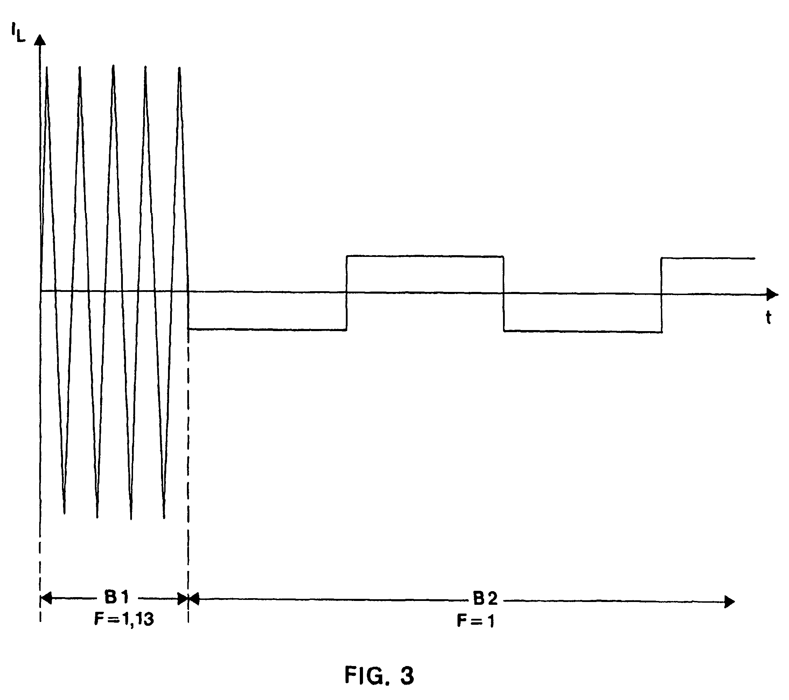

Figur 3 veranschaulicht den Stromverlauf im ersten und zweiten Betriebszustand. Im ersten Betriebszustand B1 hat der Betriebsstrom aufgrund der linearen Induktivität L sowie einer erhöhten Betriebsfrequenz einen dreieckförmigen Verlauf und damit den Formfaktor F = 1,13. Im zweiten Betriebszustand B2 ist der Betriebsstrom rechteckförmig, da die Brückenschaltfrequenz sehr niedrig ist, und hat damit den Formfaktor F = 1.

Im ersten Betriebszustand kann der Betriebsstrom aufgrund der nichtlinearen Eigenschaft der Induktiviät sowie einer erhöhten Betriebsfrequenz den Verlauf haben, der in Figur 4 dargestellt ist. Dieser Betriebsstrom hat den Formfaktor 1,45. Der zweite Betriebszustand ist identisch mit dem aus Figur 3.

Insbesondere wird bei dem in Figur 4 dargestellten Ausführungsbeispiel im Anlaufbetrieb eine Betriebsfrequenz der Vollbrücke von etwa 2 kHz gewählt. Die nichtlineare Induktivität L beträgt im ungesättigten Zustand beispielsweise 5 mH. Bei etwa 2 A Betriebsstrom geht der Induktivitätswert auf etwa 1/5, also auf 1 mH zurück.

Die Induktivität L kann zwischen einem ersten und einem zweiten Wert L', L" schaltbar sein. Das Verhältnis L'/L" aus den beiden Werten L', L" kann zwischen 2 und 20 liegen.

**Patentansprüche**

1. Verfahren zum Starten und Betreiben einer Hochdruckentladungslampe (EL), wobei der Hochdruckentladungslampe in einem Anlaufbetriebszustand nach dem Zünden der Hochdruckentladungslampe ein Strom mit einem Effektivwert ($I_{eff1}$) zugeführt wird, der höher ist als der Effektivwert eines Nennstromes, der der Hochdruckentladungslampe in einem Nominalbetriebszustand zugeführt wird, **dadurch gekennzeichnet, dass** zu der Hochdruckentladungslampe (EL) eine Induktivität (L) in Reihe geschaltet ist und der der Hochdruckentladungslampe im Anlaufbetriebszustand zugeführte Strom eine Frequenz hat, die höher ist als die Frequenz des Stroms im Nominalbetriebszustand, so dass in Folge der Induktivität (L) und der höheren Frequenz im Anlaufbetriebszustand der der Hochdruckentladungslampe im Anlaufbetriebszustand zugeführte Strom einen Formfaktor (Verhältnis $I_{eff1}/I_{gl}$), hat, der größer als "1" und größer als ein Formfaktor des der Hochdruckentladungslampe im Nominalbetriebszustand zugeführten Stroms ist.

2. Schaltungsanordnung zum Starten und Betreiben einer Hochdruckentladungslampe (EL) gemäß dem Verfahren nach Anspruch 1, mit einer Einrichtung (SNT, S1 - S4) zum Zuführen eines Stroms zu der Lampe in einem Anlaufbetriebszustand nach dem Zünden, welcher Strom einen höheren Effektivwert als ein Nennstrom im Nominalbetriebszustand hat, **dadurch gekennzeichnet, dass** zu der Lampe (EL) eine Induktivität (L) in Reihe geschaltet ist und die Einrichtung (SNT, S1 - S4) der Lampe im Anlaufbetriebszustand einen Strom mit einer höheren Frequenz als im Nominalbetriebszustand zuführt, so dass in Folge der Induktivität und der höheren Frequenz der der Hochdruckentladungslampe im Anlaufbetriebszustand zugeführte Strom einen Formfaktor hat, der größer als "1" ist und größer als ein Formfaktor des Stromes im Nominalbetriebszustand ist.

3. Schaltungsanordnung nach Anspruch 2 **dadurch gekennzeichnet, dass** diese eine Brückenanordnung (S1, S2, S3, S4) aufweist, dass in dem Brückenkreis der Brückenanordnung die Hochdruckentladungslampe (EL) und die zu dieser in Reihe geschaltete Induktivität (L) angeordnet sind, dass die Brückenanordnung eingangsseitig mit einem Schaltnetzteil (SNT) verbunden ist und von einer Steuerschaltung (C) angesteuert wird, wobei die Steuerschaltung (C) im Anlaufbetriebszustand Schalter der Brückenanordnung komplementär mit der höheren Frequenz ansteuert und in dem Nominalbetriebszustand die Schalter der Brückenanordnung komplementär mit der niedrigeren Frequenz ansteuert.

4. Schaltungsanordnung nach Anspruch 3 **dadurch gekennzeichnet, dass** das Schaltnetzteil (SNT) die in die Hochdruckentladungslampe (EL) eingespeiste Leistung regelt.

5. Schaltungsanordnung nach Anspruch 2, 3 oder 4, **dadurch gekennzeichnet, dass** die Steuerschaltung (C) das Schaltnetzteil (SNT) veranlasst, im Anlaufbetriebszustand eine relativ hohe elektrische Leistung an die Hochdruckentladungslampe abzugeben und im Nominalbetriebszustand eine relativ niedrige elektrische Leistung, die der Nominalleistung entspricht, an die Hochdruckentladungslampe abzugeben.

6. Schaltungsanordnung nach einem der Ansprüche 2 bis 5, **dadurch gekennzeichnet, dass** die Induktivität (L) nichtlinear und derart bemessen ist, dass sie im Anlaufbetriebszustand im Bereich der Sättigung betrieben wird.

7. Schaltungsanordnung nach Anspruch 6, **dadurch gekennzeichnet, dass** die Induktivität (L) so dimensioniert ist, dass im Wesentlichen bei dem 2- bis 3fachen des Effektivwerts des Nennbetriebsstroms eine Sättigung der nichtlinearen Induktivität eintritt.

8. Schaltungsanordnung nach einem der Ansprüche 2 bis 7, **dadurch gekennzeichnet, dass** die Induktivität (L) zwischen einem ersten Wert (L') und einem zweiten Wert (L") schaltbar ist.

9. Schaltungsanordnung nach einem der Ansprüche 2 bis 8, **dadurch gekennzeichnet, dass** die Zündung der Hochdruckentladungslampe durch eine Zündvorrichtung (Z) erfolgt, die durch mindestens eine zusätzliche Wicklung auf der Induktivität gebildet ist.

10. Schaltungsanordnung nach einem der Ansprüche 2 bis 9, **dadurch gekennzeichnet, dass** parallel zu der Hochdruckentladungslampe eine Kapazität (CR) angeordnet ist.

## Claims

1. Method for starting and operating a high-pressure discharge lamp (EL), the high-pressure discharge lamp, in a start-up operating state following ignition of the high-pressure discharge lamp, being fed a current having an rms value ($I_{rms1}$) which is higher than the rms value of a rated current, which is fed to the high-pressure discharge lamp in a rated operating state, **characterized in that** an inductance (L) is connected in series with the high-pressure discharge lamp (EL), and the current fed to the high-pressure discharge lamp in the start-up operating state has a frequency which is higher than the frequency of the current in the rated operating state, with the result that, owing to the inductance (L) and the higher frequency in the start-up operating state, the current fed to the high-pressure discharge lamp in the start-up operating state has a form factor (ratio $I_{rms1}/I_{gl}$) which is greater than "1" and greater than a form factor of the current fed to the high-pressure discharge lamp in the rated operating state.

2. Circuit arrangement for starting and operating a high-pressure discharge lamp (EL) in accordance with the method according to Claim 1, having a device (SNT, S1 - S4) for feeding a current to the lamp in a start-up operating state following ignition, which current has a higher rms value than a rated current in the rated operating state, **characterized in that** an inductance (L) is connected in series with the lamp (EL), and the device (SNT, S1 - S4) feeds a current to the lamp in the start-up operating state which has a higher frequency than in the rated operating state, with the result that, owing to the inductance and the higher frequency, the current fed to the high-pressure discharge lamp in the start-up operating state has a form factor which is greater than "1" and is greater than a form factor of the current in the rated operating state.

3. Circuit arrangement according to Claim 2, **characterized in that** it has a bridge arrangement (S1, S2, S3, S4), **in that** the high-pressure discharge lamp (EL) and the inductance (L), connected in series with said high-pressure discharge lamp (EL), are arranged in the bridge circuit of the bridge arrangement, **in that** the bridge arrangement is connected on the input side to a switched-mode power supply (SNT) and is driven by a control circuit (C), the control circuit (C) in the start-up operating state driving switches in the bridge arrangement in complementary fashion at the higher frequency, and, in the rated operating state, driving the switches in the bridge arrangement in complementary fashion at the lower frequency.

4. Circuit arrangement according to Claim 3, **characterized in that** the switched-mode power supply (SNT) regulates the power fed into the high-pressure discharge lamp (EL).

5. Circuit arrangement according to Claim 2, 3 or 4, **characterized in that** the control circuit (C) instructs the switched-mode power supply (SNT) to output a relatively high electrical power to the high-pressure discharge lamp in the start-up operating state and to output a relatively low electrical power, which corresponds to the rated power, to the high-pressure discharge lamp in the rated operating state.

**6.** Circuit arrangement according to one of Claims 2 to 5, **characterized in that** the inductance (L) is non-linear and is dimensioned such that it is operated in the start-up operating state in the region of saturation.

**7.** Circuit arrangement according to Claim 6, **characterized in that** the inductance (L) is dimensioned such that saturation of the non-linear inductance occurs essentially when the rms value is two to three times that of the rated operating current.

**8.** Circuit arrangement according to one of Claims 2 to 7, **characterized in that** the inductance (L) can be switched between a first value (L') and a second value (L'').

**9.** Circuit arrangement according to one of Claims 2 to 8, **characterized in that** the high-pressure discharge lamp is ignited using an ignition apparatus (Z), which is formed by at least one additional winding on the inductance.

**10.** Circuit arrangement according to one of Claims 2 to 9, **characterized in that** a capacitance (CR) is arranged in parallel with the high-pressure discharge lamp.

## Revendications

**1.** Procédé pour amorcer et pour faire fonctionner une lampe à décharge à haute pression (EL), d'après lequel, après que la lampe à décharge à haute pression a été allumée, dans un état de fonctionnement au démarrage on achemine à la lampe à décharge à haute pression un courant d'une valeur efficace ($I_{eff1}$) supérieure à la valeur efficace d'un courant nominal qu'on achemine à la lampe à décharge à haute pression dans un état de fonctionnement nominal,
**caractérisé en ce qu'**une inductance (L) est montée en série avec la lampe à décharge à haute pression (EL) et
le courant acheminé à la lampe à décharge à haute pression en état de fonctionnement au démarrage a une fréquence supérieure à la fréquence du courant en état de fonctionnement nominal, de sorte que, à cause de l'inductance (L) et de la fréquence qui est plus élevée dans l'état de fonctionnement au démarrage, le courant acheminé à la lampe à décharge à haute pression en état de fonctionnement au démarrage a un facteur de forme (rapport $I_{eff1}/Ig_1$) supérieur à " 1 " et supérieur à un facteur de forme qui est celui du courant acheminé en état de fonctionnement nominal à la lampe à décharge à haute pression.

**2.** Circuit pour amorcer et pour faire fonctionner une lampe à décharge à haute pression (EL) d'après le procédé d'après la revendication 1, comportant une installation (SNT, S1 à S4) pour acheminer un courant à la lampe dans un état de fonctionnement au démarrage après qu'elle a été allumée, lequel courant a une valeur efficace supérieure à un courant nominal dans l'état de fonctionnement nominal,
**caractérisé en ce qu'**une inductance (L) est montée en série avec la lampe (EL) et
l'installation (SNT, S1 à S4) achemine à la lampe en état de fonctionnement au démarrage un courant dont la fréquence est plus élevée que dans l'état de fonctionnement nominal, de sorte que, du fait de l'inductance et de la fréquence plus élevée, le courant acheminé à la lampe à décharge à haute pression dans l'état de fonctionnement au démarrage a un facteur de forme supérieur à " 1 " et supérieur à un facteur de forme du courant en état de fonctionnement nominal.

**3.** Circuit selon la revendication 2, **caractérisé en ce que**

- il présente une configuration en pont (S1, S2, S3, S4),
- la lampe à décharge à haute pression (EL) et l'inductance (L) montée en série avec elle sont placées dans le circuit de la configuration en pont,
- côté entrée la configuration en pont est reliée à une alimentation à découpage (SNT) et est commandée par un circuit de commande (C),

dans l'état de fonctionnement au démarrage, le circuit de commande (C) fournit alors en sus la fréquence plus élevée à des commutateurs de la configuration en pont et dans l'état de fonctionnement nominal il fournit en sus la fréquence plus basse aux commutateurs de la configuration en pont.

**4.** Circuit selon la revendication 3, **caractérisé en ce que** l'alimentation à découpage (SNT) règle la puissance fournie à la lampe à décharge à haute pression (EL).

**5.** Circuit selon la revendication 2, 3 ou 4, **caractérisé en ce que** le circuit de commande (C) fait que l'alimentation à découpage (SNT) fournit, en état de fonctionnement au démarrage, à la lampe à décharge à haute pression une puissance électrique relativement grande et fournit, en état de fonctionnement nominal, à la lampe à décharge à haute pression une puissance électrique relativement petite qui correspond à la puissance nominale.

6. Circuit selon l'une des revendications 2 à 5, **caractérisé en ce que** l'inductance (L) est non linéaire et dimensionnée de telle manière qu'elle fonctionne dans le domaine de saturation en état de fonctionnement au démarrage.

7. Circuit selon la revendication 6, **caractérisé en ce que** l'inductance (L) est dimensionnée de telle manière que l'inductance non linéaire est saturée à sensiblement entre 2 et 3 fois la valeur efficace du courant de fonctionnement nominal.

8. Circuit selon l'une des revendications 2 à 7, **caractérisé en ce que** l'inductance (L) peut être commutée entre une première valeur (L') et une deuxième valeur (L").

9. Circuit selon l'une des revendications 2 à 8, **caractérisé en ce que** la lampe à décharge à haute pression est allumée par un dispositif d'allumage (Z), qui est formé par au moins un enroulement supplémentaire sur l'inductance.

10. Circuit selon l'une des revendications 2 à 9, **caractérisé en ce qu'**une capacité (CR) est montée en parallèle à la lampe à décharge à haute pression.

FIG. 1

FIG. 2

EP 0 740 492 B1

FIG. 3

FIG. 4